# EUROPEAN PATENT APPLICATION

(11) **EP 4 637 023 A1**
(43) Date of publication of application: **22.10.2025**
(21) Application number: 24170590.4
(22) Date of filing: 16.04.2024
(51) Int. Cl.: H02P 21/00, G05F 1/67, H02J 3/38, H02P 25/022, H02P 27/04, H02P 27/06, H02P 27/08, H02P 29/20

(54) **ELECTRIC SYSTEM CONTROL**

(71) Applicant: Schneider Toshiba Inverter Europe SAS, 27120 Pacy-sur-Eure (FR)
(72) Inventor: CATALANO, Saverio, 27000 EVREUX (FR); FRAPPÉ, Emmanuel, 92100 BOULOGNE (FR)
(74) Representative: Plasseraud IP

(57) **Abstract**

Examples include methods for supplying a power from a photovoltaic panel to an electric motor; a computer-readable storage medium, a computer program product, a processor and a control circuit comprising instructions allowing carrying out the methods; and a VSD adapted to implement the methods.

## Description

### BACKGROUND

Electric motors are nowadays controlled by variable speed drives (VSD), also called variable frequency drives (VFD), or voltage-source inverters (VSI).

An electric motor driven by a variable speed drive (hereinafter referred as VSD) may be supplied by a photovoltaic panel (hereinafter referred as PV panel or solar panel). The power provided by a photovoltaic panel varies with the irradiance of the PV panel. It is therefore challenging to control the electric motor based on this supplied power.

The present disclosure improves the current situation.

### BRIEF DESCRIPTION OF THE DRAWINGS

Figure 1 schematically illustrates an example of a Power/Voltage characteristic of a PV panel.
Figure 2 schematically illustrates an example of a system according to the present disclosure.
Figure 3 schematically illustrates another example of a system according to the present disclosure.
Figure 4 schematically illustrates still another example of a system according to the present disclosure.
Figure 5 schematically illustrates an example of a method according to the present disclosure.
Figure 6a schematically illustrates another example of a Power/Voltage characteristic of a PV panel.
Figure 6b schematically illustrates yet another example of a Power/Voltage characteristic of a PV panel.
Figure 7 schematically illustrates another example of a method according to the present disclosure.
Figure 8 schematically illustrates another example of a method according to the present disclosure.
Figure 9a schematically illustrates yet another example of a Power/Voltage characteristic of a PV panel.
Figure 9b schematically illustrates yet another example of a Power/Voltage characteristic of a PV panel.
Figure 9c schematically illustrates yet another example of a Power/Voltage characteristic of a PV panel.
Figure 10 schematically illustrates yet another example of a method according to the present disclosure.
Figure 11 schematically illustrates an example of a functioning diagram of a control law of an electric motor according to the present disclosure.
Figure 12a schematically illustrates yet another example of a method according to the present disclosure.
Figure 12b schematically illustrates yet another example of a method according to the present disclosure.
Figure 13 schematically illustrates another example of a functioning diagram of a control law of an electric motor according to the present disclosure.
Figure 14 schematically illustrates yet another example of a method according to the present disclosure.
Figure 15 schematically illustrates yet another example of a method according to the present disclosure.
Figure 16 schematically illustrates yet another example of a method according to the present disclosure.

### DETAILED DESCRIPTION

In an electric system comprising a photovoltaic panel (PV panel) supplying an electric motor, the current delivered by the PV panel varies due to its irradiance conditions.

In order to benefit from a maximum of power available, a maximum power point tracking (MPPT hereinafter) technique may be used to control an output voltage of the PV panel in order to reach a voltage associated with a maximum of power delivered by the solar panel.

The MPPT technique is a technique which continuously controls, by increment or decrement, the output voltage of the PV panel while monitoring the power delivered by the PV panel. As long as the power is rising when incrementing (or respectively decrementing) the voltage, the MPPT technique continues to increment (or respectively decrement) the output voltage. When the power starts to reduce, the MPPT technique inverses the direction of the control. That is, if the control was incrementing (or decrementing) the voltage, the control starts to decrement (respectively increment) the voltage when the power starts to decrease. Hence, the MPPT technique converges toward a maximum of power. The inventors have cleverly noticed that since the MPPT technique does not scan the whole power/voltage characteristic of the PV panel before being implemented, this technique leads to stabilize the voltage at the first maximum of power met by the technique, which may be a local maximum of power and not at a global maximum of power.

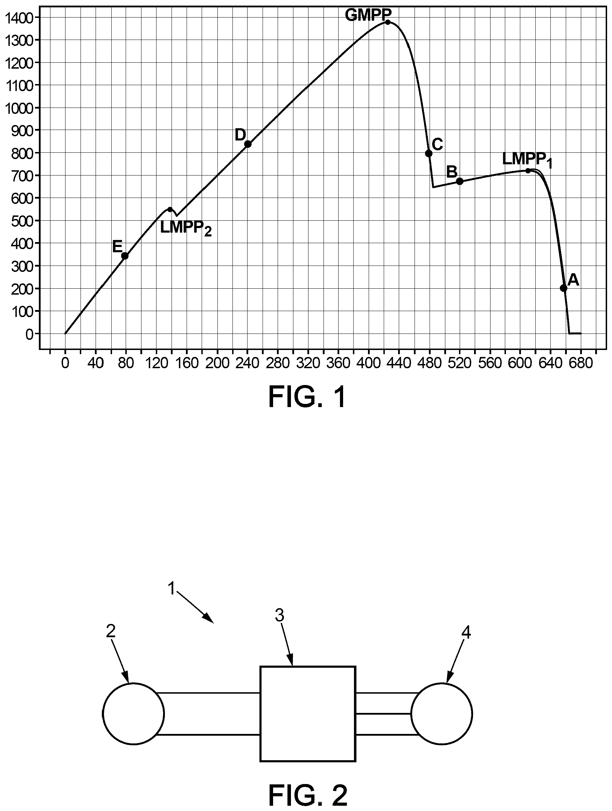

The figure 1 represents a power/voltage characteristic of a PV panel partially shaded and will be used to describe different scenarios of MPPT techniques, and especially to show why the voltage may be stabilized at a local maximum power point, depending on a voltage at which the MPPT technique is started. The x-axis represents the output voltage of the PV panel while the y-axis represents the power generated by the PV panel.

In a first scenario where the MPPT technique is started at point A, that is, when the output voltage of the PV panel is around 660V, the latter voltage will be controlled (decremented) until be stabilized around 610V, at a point corresponding to a first local maximum power point LMPP₁. Indeed, when the voltage will be decremented below 610V, the power will be reduced, such that the MPPT technique will inverse the control (pass from voltage decrement to voltage increment), such that the voltage will be incremented to 610 V, and once the voltage will be greater than 610V, the power will be reduced, and the control will once again be inverted (pass from voltage increment to voltage decrement), until be stabilized. Hence, the voltage will converge around 610V at a point corresponding to the first local maximum power point LMPP₁. In a second scenario where the MPPT technique is started at point B, that is, when the output voltage of the PV panel is around 520V, the voltage will be controlled (incremented this time) until be stabilized at the same voltage (around 610V) associated to the first local maximum power point LMPP₁. In a third scenario where the MPPT technique is started at point C, that is, when the output voltage of the PV panel is around 480V, the voltage will be controlled (decremented) until be stabilized around 425V, which corresponds to the global maximum power point, GMPP. In a fourth scenario where the MPPT technique is started at point D, that is, when the output voltage of the PV panel is around 240V, the voltage will be controlled (incremented) until be stabilized around 425V, which corresponds to the GMPP. Finally, in a fifth scenario where the MPPT technique is started at point E, that is, when the output voltage of the PV panel is around 80V, the voltage will be controlled (incremented) until be stabilized at a 140V associated to a second local maximum power point LMPP₂. Only the third and the fourth scenario leads the MPPT technique to stabilize the output voltage of the PV panel to a voltage maximizing the power supplied by the PV panel.

The inventors have also noted that controlling the output voltage of the PV panel in an electric system comprising a PV panel directly supplying a variable speed drive (VSD) driving an electric motor represents a challenge. A PV panel directly supplying a VSD means that the PV panel is directly connected to the VSD. That is, the PV panel is not connected to a DC/DC converter (DC stands for Direct-Current) which is then connected to the VSD to supply the VSD with a constant voltage. In case of a system with a DC/DC converter, which is an expensive system, the output voltage of the PV panel can be controlled by the DC/DC converter, without any impact in the electric motor control. Indeed, the voltage output of the DC/DC converter connected to the VSD is maintained stable such that modifying the voltage output of the PV panel does not produce any change in the control of the electric motor implemented by the VSD. However, when the VSD driving the electric motor is directly connected to the PV panel, the control of the electric motor by the VSD represents a challenge.

The inventors therefore propose a solution which may allow implementing a global maximum power point tracking technique, GMPPT, in an electric system comprising a PV panel directly connected to a VSD driving an electric motor. The solution presented by the present disclosure allows improving the power supplied by the PV panel to the electric motor compared to a MPPT technique.

With reference to figures 2 to 4, it is now described an example of system 1 in which a method according to any one of the examples described in the present disclosure may be implemented.

The system 1 comprises a photovoltaic panel 2 connected to a variable speed drive 3. As mentioned above, the VSD 3 is directly connected to the PV panel 2. That is, there is no DC/DC converter between the PV panel 2 and the VSD 3.

A PV panel should be understood in this disclosure as any electronic or electrical unit able to convert light (photons) into an electrical current.

A variable speed drive 3 should be understood in this disclosure as an electronic, electrical, virtual or software implemented control unit for an electric motor. A variable speed drive may control an electric motor 4 using a control law determining a speed reference for the electric motor and applying a determined voltage to the electric motor according to the speed reference.

The VSD 3 is driving an electric motor 4. An electric motor 4 should be understood in this disclosure as any kind of electric motors which may be driven by a variable speed drive. In the illustrated non-limitative examples of systems 1, the electric motor 4 comprises three windings.

More specifically, the output of the PV panel 2 is connected to a DC-link 32 of the VSD 3. A DC-link 32 may be defined as a circuit configured to stabilize the voltage of a direct power bus. The DC-link 32 especially comprises a positive bus 32+ and a negative bus 32-. In some examples, the DC-link presents a C-Less topology, for example a small film capacitor having an order of magnitude of 15 uF/kW. In other examples, the DC-link may comprise at least one of:
- an electrolyte capacitor having an order of magnitude of 100 uF/kW; or
- DC-link inductors.

The variable speed drive 3 also comprises an inverter 33, connected to the DC-link 32, and configured to cut off the voltage supplied by the DC-link into a variable voltage to control the electric motor 4.

In some examples, the inverter 33 may comprise a leg for each respective winding of the electric motor 4. In the illustrative examples of systems 1, the inverter 33 therefore comprises 3 legs. Each leg is connected on one side to a positive bus 32+ and on another side to a negative bus 32- of the DC-link 32.

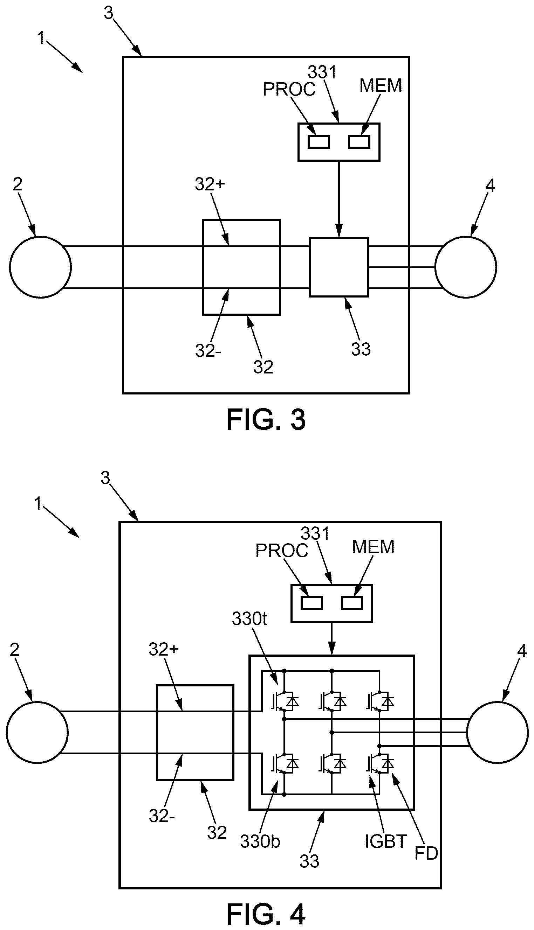

The inverter 33 may comprise two switches 330 by leg. Each leg of the inverter comprises a top switch 330t and a bottom switch 330b. A connection between a leg and a winding of the electric motor 4 may be located between the top switch 330t and the bottom switch 330b as illustrated in figure 4. Top and bottom are used here to differentiate two switches in the illustrated example and may not necessarily imply that such switches are effectively in a top/bottom configuration.

Each switch 330 comprises two components. A first component is an Insulated Gate Bipolar Transistor, IGBT, and a second component is a freewheeling diode FD connected in parallel with the IGBT.

In some examples, the inverter 33 comprises a control circuit 331 allowing controlling a leg of the inverter 33, and advantageously each leg of the inverter 33. The control circuit 331 especially allows firing the IGBTs in due time based on a control law of the electric motor. The control circuit 311 is especially configured to send an electric signal (for instance a trigger pulse) to the gate of the IGBT for firing the IGBT, i.e. in order to switch the IGBT from a blocking state to a passing state. The control circuit 311 may be configured to operate at least a part of any examples of the method 100 hereby described. The control circuit 311 may especially be configured to implement any example of a control law of the electric motor presented hereby.

More specifically, the control circuit 311 may comprise a processor PROC and a memory MEM. The processor PROC may implement Pulse Width Modulation, PWM, signals based on the control law of the electric motor. The control law performed by the processor PROC makes it possible to determine the voltage to be applied to the output phases intended to be connected to the electric motor 4 to be controlled. The processor PROC may be configured to operate at least a part of any examples of the method 100 hereby described.

The memory MEM may correspond to a non-transitory machine-readable or computer readable storage medium. The memory MEM may be encoded with instructions executable by a controller such as the controller PROC. The memory MEM may comprise instructions to operate the controller PROC to perform at least a part of the examples of the method 100 hereby described. The memory MEM according to this disclosure may be any electronic, magnetic, optical or other physical storage device that stores executable instructions. The memory MEM may be, for example, Random Access Memory (RAM), an Electrically Erasable Programmable Read Only Memory (EEPROM), a storage drive, an optical disk, and the like. The controller PROC has therefore access to the information stored in the memory MEM.

In some examples, the system 1 may comprise a voltmeter (not shown) for acquiring voltage measurements of the DC-link 32 (which corresponds to the output voltage of the PV panel 2). In these examples, the voltmeter measures a voltage applied between the positive bus 32+ and the negative bus 32- of the DC-link 32. A voltmeter may for example be included in the variable speed drive 3.

In some examples, the system 1 may comprise an ammeter (not shown) for acquiring current measurements of the DC-link 32 (which corresponds to the output current of the PV panel 2). The ammeter may for example be included in the variable speed drive 3.

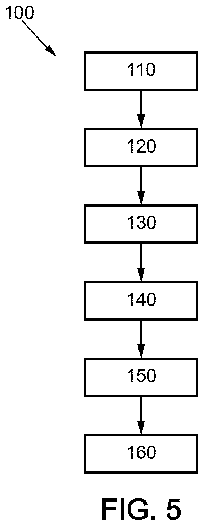

It is now described with reference to figure 5 an example of computer-implemented method 100 for supplying a power from a PV panel 2 to an electric motor 4, the photovoltaic panel 2 being connected to a VSD 3 driving the electric motor 4. As previously explained, the examples of method 100 describes in the present disclosure may be applied in any one of the examples of systems 1 described in the present disclosure, and may especially be applied at least in part by the control circuit 311 of the VSD 3.

It should be noted that the example of methods 100 illustrated in the figures are merely an illustration of examples of process representing, by means of blocks, the various operations that may be included in the process and described in the remainder of the document. As such, this illustration does not reflect any seriality between operations. In other words, the operations described with reference to the methods 100 illustrated in the figures are not necessarily implemented one after the other, and may in particular be implemented in a different order from the ones shown in the figures, or be implemented in parallel, unless when a given operation needs an output from another operation to be implemented. Similarly, it is not necessary for each operation to be implemented once before that a same operation could be performed a second time. The frequency of implementation of each operation is specific to it and is not necessarily linked to the implementation of the other operations.

One of the objectives of the examples of method 100 is to transfer as much power as possible from the PV panel 2 to the electric motor 4, in view of the current conditions of irradiance of the PV panel 2. This objective will be achieved by finding and reaching an output voltage of the PV panel 2 associated with a maximum of power of a Power/Voltage characteristic of the PV panel 2.

As illustrated in block 110, the method 100 comprises controlling the electric motor 4 to produce at least one voltage variation ΔV at an output voltage of the PV panel 2. In an example of system 1 wherein the VSD 3 is directly connected to the PV panel 2, the inventors have cleverly found out that a way to control the output voltage of the PV panel (to reach a maximum power) is to control the electric motor, for example by controlling a speed of the electric motor.

As illustrated in block 120, the method 100 comprises monitoring a power supplied by the PV panel 2 during a latest voltage variation ΔV of the at least one voltage variation ΔV. Monitoring a power supplied by the PV panel 2 during the latest voltage variation ΔV allows determining a Power/Voltage characteristic of the PV panel 2 during the latest voltage variation ΔV of the at least one voltage variation ΔV. We understand that when there is only one voltage variation ΔV, the latest voltage variation ΔV corresponds to the unique voltage variation ΔV. In the other cases, the latest voltage variation ΔV of the at least one voltage variation ΔV corresponds to the voltage variation ΔV of the at least one voltage ΔV which have been implemented, in time, at a last position. In some examples, the power supplied by the PV panel may also be monitored during all the voltage variations ΔV of the at least one voltage variation ΔV.

A power supplied by the PV panel 2 during a voltage variation ΔV may be determined based on at least one of the following pairs of parameters:
- a speed and a couple of the electric motor 4; or
- an output current and an output voltage of the PV panel 2.

Hence, measurements or estimations of the parameters are made during the latest voltage variation ΔV for monitoring the power supplied by the PV panel 2 during said latest voltage variation ΔV. It should be noted that a speed and a couple of the electric motor 4 are required for the control of the electric motor, such that they are already determined by the VSD. With respect to the output current and output voltage of the PV panel 2, they respectively correspond to the input current and input voltage of the DC-link, which are already determined by the VSD to produce the alternating voltage applied to electric motor 4. That is, the power monitoring does not require adding any elements to the VSD for determining these parameters.

In some examples, the input voltage and the input current may be determined based on measurements respectively acquired by the voltmeter and by the ammeter of the VSD 3. Alternatively, the input current of the DC-link may be determined based on a power supplied by the PV panel 2 and based on the input voltage of the DC-link.

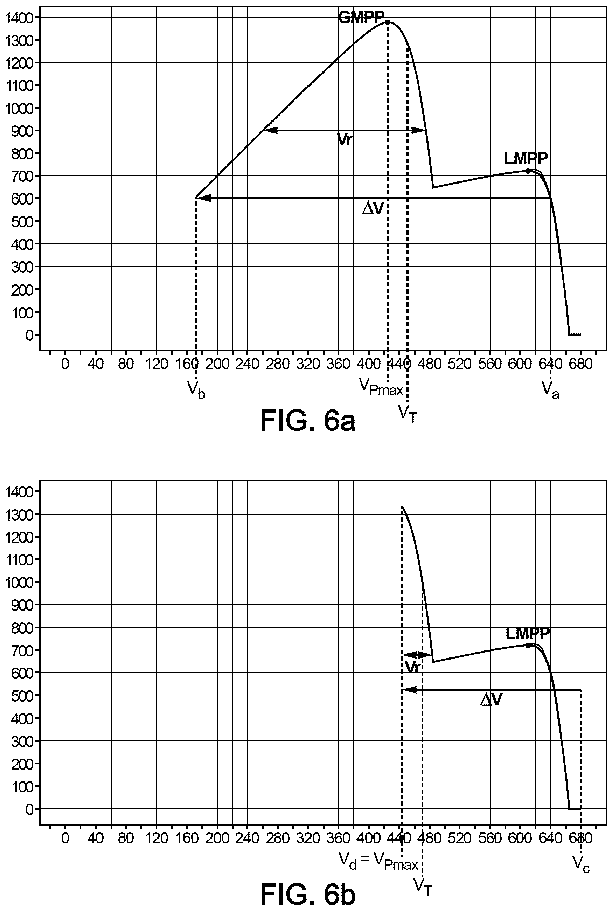

A first example of a latest voltage variation ΔV represented in a Power/Voltage characteristic of a PV panel is illustrated in figure 6a. The latest voltage variation ΔV corresponds here to the variation from a voltage Vₐ (around 640V) to a voltage V_{b} (around 170V). A second example of a latest voltage variation ΔV represented in a Power/Voltage characteristic of a PV panel is illustrated in figure 6b. In figure 6b, the latest voltage variation corresponds to the variation from a voltage V_{c} (around 680V) to a voltage V_{d} (around 445V). In these figures, a portion of a Power/Voltage characteristic of the PV panel of figure 1 are illustrated since the latest voltage variation ΔV of these two examples does not cover the full range of the voltage variation illustrated in figure 1. In other words, only a portion of the Power/Voltage characteristic of figure 1 can be determined from the latest voltage variation ΔV of figures 6a and 6b.

As illustrated in block 130, the method 100 comprises identifying a voltage V_{Pmax} having maximized the power supplied by the PV panel during the latest voltage variation ΔV of the at least one voltage variation. Here, the method 100 focuses on the latest voltage variation ΔV of the at least one voltage variation considering that the Power/Voltage characteristic of the PV panel 2 may have evolved during the voltage variations, for example due to a variation of irradiance of the PV panel during the at least one voltage variation ΔV. Hence, the latest voltage variation corresponds to the latest conditions of irradiance of the PV panel, which are most likely to be the most accurate. The identified voltage V_{Pmax} having maximized the power supplied by the PV panel during the latest voltage variation is illustrated in figures 6a and 6b. In figure 6a, it corresponds to the voltage V_{Pmax} associated to the GMPP but we understand that depending on the voltage variation ΔV, the voltage can correspond to an identified voltage V_{Pmax} associated with another maximum of power. The identified voltage V_{Pmax} having maximized the power supplied by the PV panel 2 during the latest voltage may for example corresponds to a boundary of the latest voltage variation ΔV, as illustrated in figure 6b where the voltage V_{Pmax} corresponds to the voltage V_{d} of the voltage variation ΔV.

As illustrated in block 140, the method 100 comprises defining a target voltage V_{T} such that applying a MPPT technique from the target voltage V_{T} controls the output voltage of the PV panel to reach the identified voltage V_{Pmax}.

In some examples, the target voltage V_{T} belongs to a voltage range Vr of the output voltage of the PV panel. The voltage range Vr is defined below such that any target voltage V_{T} chosen in this voltage range Vr is a voltage starting point which leads a MPPT technique activated from this voltage starting point to control the output voltage of the PV panel to reach the identified voltage V_{Pmax}.

The voltage range Vr is defined as comprising a single maximum of power of the latest voltage variation ΔV and as being free of any minimum of power of the latest voltage variation ΔV. The single maximum of power of the latest voltage variation corresponds to the maximum of power associated to the identified voltage V_{Pmax}. A voltage range Vr which comprises a single maximum of power of the latest voltage variation ΔV, and which is free of any minimum of power of the latest voltage variation ΔV should be understood as an interval of voltages of the latest voltage variation ΔV, wherein the changes of power in this interval, monitored during block 120, comprises a unique maximum of voltage and does not comprise any minimum of voltage (no local minimum of power or no minimum of power associated to a boundary of the latest voltage variation ΔV). As illustrated in figure 6b, the maximum of power can be associated with a boundary of voltage (Vₐ, V_{b}, V_{c}, V_{d}) of the latest voltage variation ΔV. Different possibilities of voltage range Vr corresponding to the definition above are illustrated in the figures.

As illustrated in block 150, the method 100 comprises controlling the electric motor to reach the target voltage at the output voltage of the PV panel 2. As explained in block 110, the method 100 cleverly uses the control of the electric motor 4 to control the output voltage of the PV panel 2.

As illustrated in block 160, the method 100 comprises starting the MPPT technique from the target voltage. This block would allow the output voltage of the PV panel 2 to reach the identified voltage V_{Pmax} from the target voltage V_{T}, which therefore allows the PV panel to deliver the maximum of power identified during the latest voltage variation ΔV, in view of its latest conditions of irradiance.

The method 100 therefore allows using an energy supplied by a PV panel 2 to drive an electric motor in a system wherein there is no DC/DC converter for modifying the output voltage of the PV panel, while controlling the output voltage of the PV panel to benefit from a maximum power (not necessarily a global maximum of power) in view of the conditions of irradiance of the PV panel. The method 100 ingeniously uses the control of the electric motor to control the output voltage of the PV panel 2, and therefore identifies and reaches a voltage associated with a maximum of power of the latest voltage variation of the output voltage of a PV panel 2.

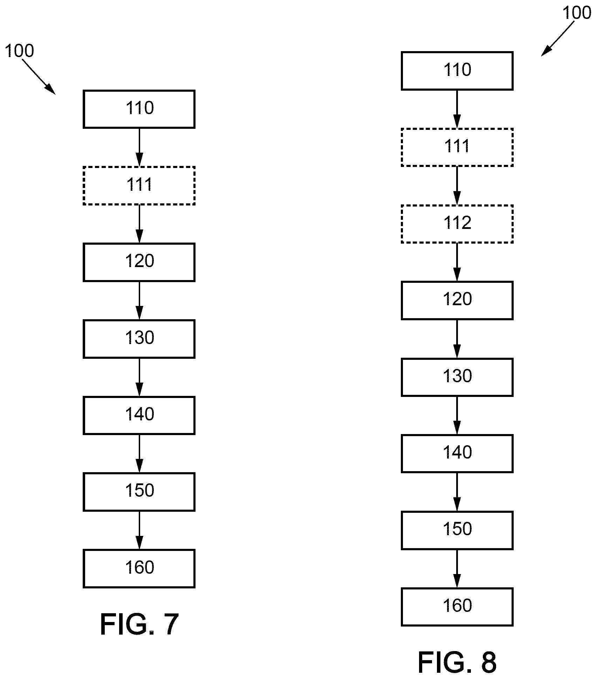

In some examples, the block 110 of controlling the electric motor to produce at least one voltage variation may comprise controlling the electric motor to produce a first voltage variation ΔV₁. The first voltage variation ΔV₁ corresponds to an evolution of the output voltage of the PV panel from a first voltage V₁ to a second voltage V₂. These examples are illustrated in figure 7 by the block 111.

In some examples of method 100 comprising the block 111, the first voltage V₁ may be determined based on:
a current V_{cur} voltage at an output voltage of the PV panel; or
an output voltage of the PV panel when a speed of an electric motor 4 is at a minimum point. The first voltage V₁ may especially correspond to the current voltage at the output voltage of the PV panel or may correspond to the output voltage of the PV panel when a speed of an electric motor 4 is at a minimum point.
The minimum point of speed of the electric motor may be defined depending on a current application using the electric motor of the system 1. If the current application allows the electric motor to be completely stopped without any injuries, a speed of the electric motor at a minimum point may correspond to 0. However, some applications may present another minimum point of speed for the electric motor to avoid injuries. For example, when the electric motor drives a pump, the characteristics of some pumps may not allow the pump to be completely stopped in any conditions unless being submitted to damages (for example due to a lack of lubrication at a lower speed), such that an operator of the system 1 in its current application may define a minimum point of speed of the electric motor different from 0.

Having a first voltage V₁ determined based on the current voltage V_{cur} at the output voltage of the PV panel allows starting the method 100 from the current operating point of the system 1. That is, no initialization of the output voltage of the PV panel 2 is performed to produce the first voltage variation ΔV₁ of the method 100.

Having a first voltage V₁ determined based on an output voltage of the PV panel when a speed of an electric motor is at a minimum point allows initializing the method 100 at a maximum voltage of the Power/Voltage characteristic of the PV panel for the current application of the system 1. Indeed, although the inventors have determined that a relationship between a speed of the electric motor and an output voltage of the PV panel 2 is not linear, they have cleverly noticed that a maximum voltage of the Power/Voltage characteristic of the PV panel for a given application is reached when a speed of the electric motor is controlled at a minimum point which depends on the given application. This point is particularly important since the speed of the electric motor is already the reference used in the control law of the electric motor 4. Hence, the control of the electric motor 4 to reach the minimum point of speed (and therefore the maximum voltage of the Power/Voltage characteristic) does not require to amend an existing control law of the VSD and simply requires, for a user of the method 100, to provide a reference speed corresponding to the minimum point of speed allowed by the application.

In some examples of method 100 comprising the block 111, the second voltage V₂ may be determined based on a minimum operating voltage allowing the VSD to control the electric motor by producing an alternating voltage supplying the electric motor. The second voltage V₂ may especially correspond to the minimum operating voltage allowing the VSD to control the electric motor. That is, the second voltage V₂ is determined such that the output voltage of the PV panel 2 is sufficient (i.e. high enough) to allow the VSD to control the electric motor. Hence, the minimum operating voltage may be determined based on the intrinsic parameters of the VSD 3. The minimum operating voltage may especially be determined based on a technical specification of the VSD 3.

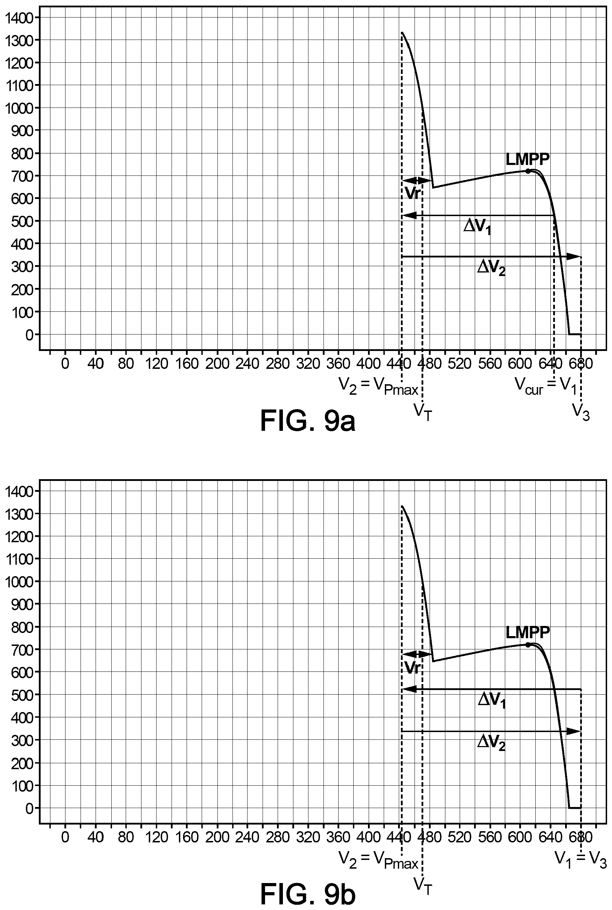

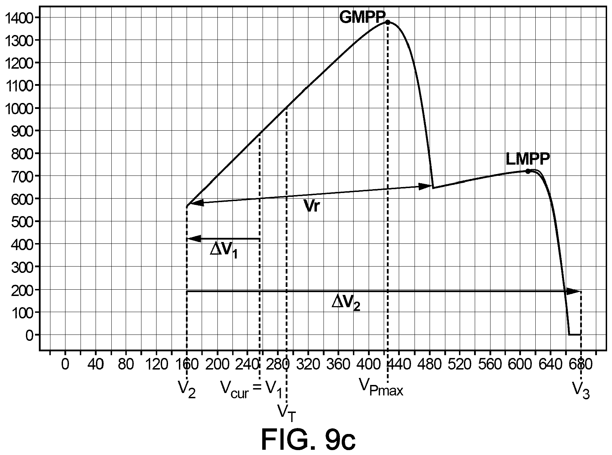

We therefore understand that in a first option wherein the first voltage V₁ corresponds to the current output voltage V_{cur} of the PV panel, the first voltage variation ΔV₁ may evolve from the current output voltage V_{cur} of the PV panel to the minimum voltage (V₂) allowing the VSD to control the electric motor. The figures 9a and 9c illustrate this first option of first voltage variation ΔV₁. In these figures, the minimum voltage V₂ allowing controlling the VSD is different to show two different situations of second voltage variation ΔV₂.

We also understand than in a second option wherein the first voltage V₁ corresponds to the output voltage of the PV panel when the speed of an electric motor is at the minimum point, the first voltage variation ΔV₁ evolves in all the voltage range allowed by the current application of the system 1. Indeed, the maximum voltage of the possible voltage range allowed by the current application of the system 1 is fixed by the allowed minimum speed of the electric motor in view of the current application of the system 1, while the minimum voltage of the possible voltage range is defined as the minimum voltage allowing the VSD to control the electric motor. Hence, in this second option, the first voltage variation ΔV₁ allows determining, by the monitoring of the power supplied by the PV panel 2 implemented in block 120, the whole possible Power/Voltage characteristic of the PV panel associated to the current application of the system 1. The figure 9b illustrates this second option of first voltage variation ΔV₁.

In some examples of method 100 comprising the block 111, controlling the electric motor to produce at least one voltage variation at the output voltage of the PV panel may comprise controlling the electric motor to produce a second voltage variation ΔV₂. These examples are illustrated in the figure 8 by the block 112. The second voltage variation is successive to the first voltage variation AV₂. The second voltage variation AV₂ corresponds to an evolution of the output voltage of the PV panel from the second voltage V₂ to a third voltage V₃. A direction of a voltage variation ΔV of the second voltage variation AV₂ may be opposite to a direction of a voltage variation ΔV of the first voltage variation ΔV₁. In other words, if the first voltage variation ΔV₁ has reduced (respectively raised) the output voltage of the PV panel 2, the second voltage variation ΔV₂ will raise (respectively reduce) the output voltage of the PV panel 2. These examples allow determining a second time the Power/Voltage characteristic of the PV panel 2 and using the latest voltage variation ΔV to identify the voltage V_{Pmax} associated with the maximum of power.

In some examples of method 100 comprising the block 112, the third voltage V₃ is determined based on the output voltage of the PV panel when the speed of the electric motor is at the minimum point. The third voltage V₃ may especially correspond to the output voltage of the PV panel when the speed of the electric motor is at the minimum point. In these examples, the second voltage variation ΔV₂, since this voltage variation produces an evolution of the voltage from the second voltage V₂ (determined based on the minimum voltage allowing the VSD to control the electric motor) to the third voltage V₃ (determined based on the minimum point of speed of the motor), also allows determining the whole possible Power/Voltage characteristic of the PV panel 2 with respect to the current application of the system 1.

That is, at the end of the block 112, the whole possible Power/Voltage characteristic of the PV panel 2, in view of the current application, is determined. Hence, when the voltage V_{Pmax} having maximized the power supplied by the PV panel during the latest voltage variation of the at least one voltage variation is identified, it corresponds to the voltage associated to the maximum available power supplied by the PV 2 panel in view of the current application of the system 1. This phenomenon is well illustrated in figure 9c where the first voltage variation ΔV₁ only allows determining a little portion of the Power/Voltage characteristic of the PV panel 2 in view of the current application. At the end of the first voltage variation ΔV₁, the voltage maximizing the power supplied by the PV panel corresponds to the first voltage V₁. Hence, if the method 100 was only based on the first voltage variation ΔV₁ in this case, the method 100 would start the MPPT for reaching the first voltage V₁. However, when the electric motor is also controlled to produce the second voltage variation ΔV₂, the voltage maximizing the power supplied by the PV panel of the latest voltage variation ΔV becomes the voltage V_{Pmax} associated to the GMPP such that the method 100 would start the MPPT to reach the voltage V_{Pmax}.

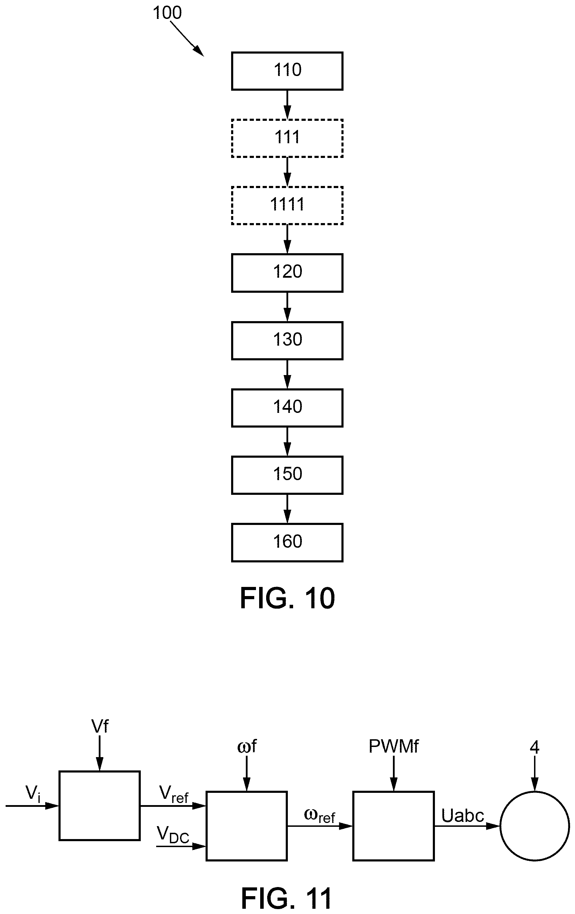

In some examples of method 100 comprising the block 111, controlling the electric motor to produce the first voltage variation ΔV₁ may comprise a block 1111 of determining a first voltage reference V_{ref1} in a control law of the electric motor. The first voltage reference V_{ref1} is associated with the voltage of the DC-link of the VSD (or with the output voltage of the PV panel, which corresponds to the same voltage). The first voltage reference V_{ref1} corresponds to the second voltage V₂ of the first voltage variation ΔV₁. In these examples, the first voltage reference V_{ref1} is used in the control law of the electric motor to determine a first speed reference ω_{ref1} for the electric motor. That is, when the VSD controls the electric motor using the first speed reference ω_{ref1}, the control of the electric motor will lead the voltage in the DC-link to reach the second voltage V₂. Since the voltage of the DC-link corresponds to the output voltage of the PV panel 2, these examples allow controlling the output voltage of the PV panel using the control law of the electric motor applied by the VSD. These examples are schematically illustrated in figure 10.

The figure 11 illustrates an example of a functioning diagram of a control law of the electric motor allowing controlling the electric motor to produce a voltage variation ΔV in the output voltage of the PV panel. As previously explained, the control law of the electric motor 4 may be implemented by the VSD, for example by the control circuit 311 of the VSD. The control law may especially be performed by the processor PROC of the control circuit 311 of the VSD.

In the example of functioning diagram of figure 11, the control law of the electric motor 4 comprises a function Vf, a function ωf and a function PWMf.

The function Vf is configured to determine a voltage reference V_{ref} based on an input voltage Vᵢ. The voltage reference V_{ref} may especially correspond to the input voltage Vᵢ. The voltage Vᵢ may therefore correspond to the second voltage V₂ when the control law performs the first voltage variation ΔV₁, to the third voltage V₃ when the control law performs the second voltage variation ΔV₁, or to the target voltage V_{T} when the control law controls the electric motor to reach said target voltage V_{T} in block 150. The input Vᵢ voltage may also correspond to the current output voltage of the PV panel 2 (which corresponds to the voltage of the DC-link) with an increment or a decrement of voltage when the control law controls the electric motor to perform the MPPT technique. In some examples of method 100 comprising the block 1111, the function Vf may therefore be configured to determine the first voltage reference V_{ref1} based on the second voltage V₂.

The function of is configured to determine a speed reference ω_{ref} based on the voltage reference V_{ref} determined by the function Vf and on the current voltage V_{DC} in the DC-link (which corresponds to the output voltage of the PV panel). In some examples of method 100 comprising the block 1111, the function of may therefore be configured to determine the first speed reference ω_{ref1} based on the first voltage reference V_{ref1}.

The function PWMf is configured to apply a determined voltage U_{abc} to the electric motor based on the speed reference ω_{ref}. The function PWMf may especially determine PWM signals allowing controlling the IGBT of the inverter 33 to apply a determined voltage U_{abc} in each winding of the electric motor 4 to control the electric motor 4 according to the speed reference ω_{ref}.

It should be noted that the example of functioning diagram of a control law of the electric motor illustrated in figure 11 may be implemented to control the electric motor for at least one of the following operations:
producing the first voltage variation ΔV₁;
producing the second voltage variation ΔV₂;
reaching the target voltage V_{T}; or
producing an increment or a decrement of voltage in the MPPT technique.

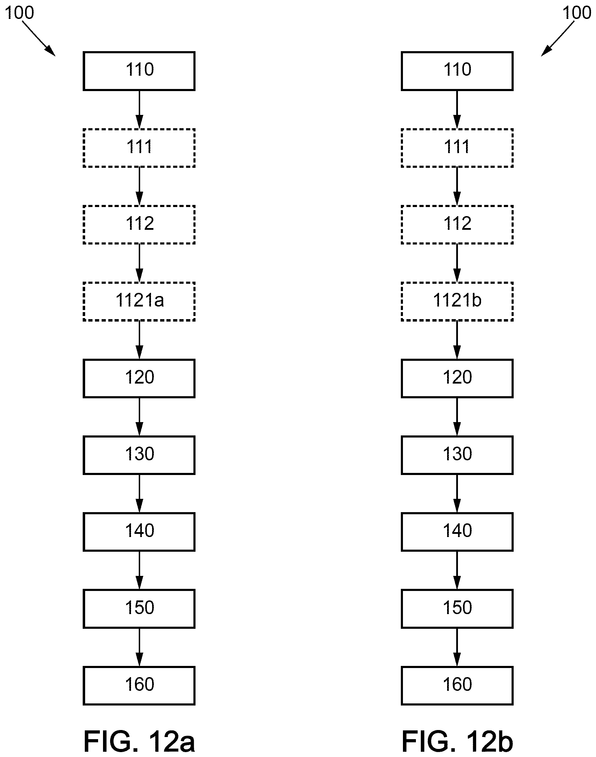

In some first examples of method 100 comprising the block 112, controlling the electric motor to produce the second voltage variation ΔV_{b} may comprise a block 1121a of determining a second voltage reference V_{ref2} in a control law of the electric motor. The second voltage reference V_{ref2} is associated with the voltage of the DC-link of the VSD. The second voltage reference V_{ref2} may correspond to the third voltage V₃ of the second voltage variation ΔV₂. In these examples, the second voltage reference V_{ref2} may be used in the control law of the electric motor to determine a second speed reference ω_{ref2} for the electric motor. That is, when the VSD controls the motor using the second speed reference ω_{ref2}, the control of the electric motor will lead the voltage in the DC-link to reach the third voltage V₃. These examples are schematically illustrated in figure 12a. We understand here that, in the functioning diagram of figure 11, the function Vf may be configured to determine the second voltage reference V_{ref2} based on the third voltage V₃, and that the function ωf may be configured to determine the second speed reference ω_{ref2} based on the second voltage reference V_{ref2}.

In some second examples of method 100 comprising the block 112, controlling the electric motor to produce the second voltage variation ΔV₂ (from the second voltage V₂ to the third voltage V₃) may comprise a block 1121b of determining a minimum speed reference ωₘᵢₙ for the electric motor. The minimum speed reference ωₘᵢₙ may be determined in a control law of the electric motor. As explained above, VSDs already control the electric motors based on a speed reference ω_{ref} such that the control law of the electric motor implemented by VSDs may not be amended to produce the second voltage variation ΔV₂. These examples are schematically illustrated in figure 12b.

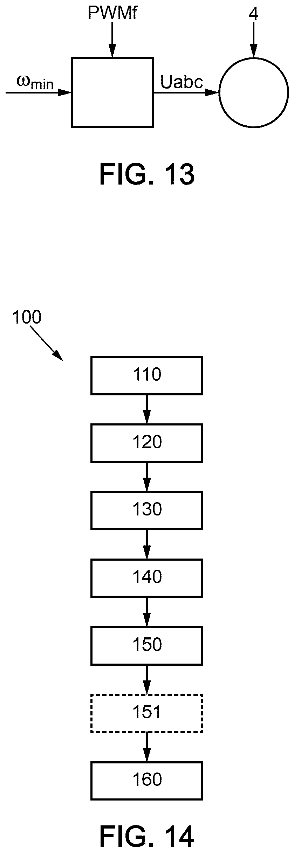

The figure 13 illustrates another example of functioning diagram of a control law of the VSD according to the examples of figure 12b. In this diagram, a minimum speed reference ωₘᵢₙ may be directly inputted into the function PWMf allowing applying a determined voltage U_{abc} to the electric motor based on said speed reference. In other words, in this example of functioning diagram, there is no need to convert a voltage reference V_{ref} to a speed reference ω_{ref}, the minimum speed reference ωₘᵢₙ is directly applied as input parameter of the control law of the electric motor. Hence, when the VSD controls the motor using the minimum speed reference ωₘᵢₙ, the control of the electric motor will lead the voltage in the DC-link to reach the third voltage V₃.

In some examples, controlling the electric motor to reach the target voltage V_{T} at the output voltage of the PV panel may comprise a block 151 of determining a third voltage reference V_{ref3} in a control law of the electric motor. The third voltage reference V_{ref3} is associated to the voltage of the DC-link of the VSD. The third voltage reference V_{ref3} may be used in the control law of the electric motor to determine a third speed reference ω_{ref3} for the electric motor. That is, when the VSD controls the electric motor using the third speed reference ω_{ref3}, the control of the electric motor will lead the voltage in the DC-link to reach the target voltage V_{T}. These examples are schematically illustrated in figure 14. We understand here that, in the functioning diagram of figure 11, the function Vf may be configured to determine the third voltage reference V_{ref3} based on the target voltage V_{T}, and that the function ωf may be configured to determine the third speed reference ω_{ref3} based on the third voltage reference V_{ref3}.

In some examples, the target voltage V_{T} is defined as a voltage greater than the identified voltage V_{Pmax}. The inventors have found out that controlling the electric motor to reduce the output voltage of the PV panel 2 is faster than controlling the electric motor to increase the output voltage of the PV panel, due to the non-linearity of the relationship between speed of the electric motor and output voltage of the PV panel 2. Moreover, in the examples of method 100 comprising the block 112, since the second voltage variation ΔV₂ may lead the output voltage of the PV panel to its maximum, having a target voltage V_{T} lower than the identified voltage means that the identified voltage V_{Pmax} will be reached before reaching the target voltage V_{T}. It is therefore faster to determine the target voltage V_{T} at a voltage greater than the identified voltage V_{Pmax} and starts the MPPT technique from the target voltage V_{T} to converge to the identified voltage V_{Pmax}.

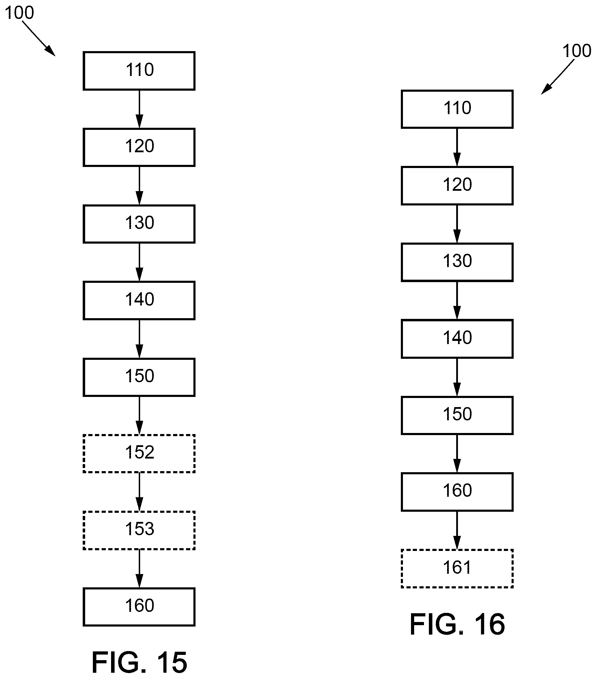

In some examples, the method 100 may further comprise two other blocks 152 and 153, as illustrated in figure 15. In block 152, the method 100 monitors the power supplied by the PV panel 2 during the control of the electric motor to reach the target voltage V_{T}. That is, when the method 100 implements the block 150 of reaching the target voltage V_{T}, the method 100 also monitors the power supplied by the PV panel 2.

Then, the block 153 is implemented if the power supplied by the PV panel 2 during the control of the electric motor 4 to reach the target voltage V_{T} becomes greater than the power associated to the identified voltage V_{Pmax}. Indeed, as explained above, the irradiance conditions of the PV panel 2 may evolve and may especially evolve when the method 100 implements the block 150 of controlling the electric motor to reach the target voltage V_{T}. Hence, if during the control of the electric motor to reach the target voltage V_{T}, a power supplied by the PV 2 becomes greater than a power associated to the identified voltage V_{Pmax} (corresponding to the maximum of power of the latest voltage variation ΔV), this means that the irradiance conditions of the PV panel 2 have evolved and that the power associated to the identified voltage V_{Pmax} is no more an available maximum of power to be supplied by the PV panel 2.

The block 153 corresponds to redefine the target voltage V_{T} as the current output voltage of the PV panel 2. Since the block 160 of starting the MPPT technique is implemented when the output voltage of the PV panel reaches the target voltage V_{T}, this redefinition of the target voltage V_{T} allows therefore implementing the MPPT technique of the block 160 if the power of the PV panel becomes greater than the power associated to the identified voltage V_{Pmax}. Hence, a new maximum of power will be reached by the MPPT technique starting from the redefined target voltage V_{T} (corresponding to the current output voltage of the PV panel 2).

In some examples, the block 160 of starting a MPPT technique from the target voltage V_{T} may comprise a block 161 of determining successive voltage references V_{ref} in a control law of the electric motor. The successive voltage references V_{ref} are associated to the voltage of the DC-link of the VSD. These examples are illustrated in figure 16. Each voltage reference V_{ref} of the successive voltage references may be inputted in the function ωf to determine a respective speed reference ω_{ref}.

In some examples, a new iteration of the method 100 may be started when a timer started at a latest iteration of the method 100 becomes greater than a first threshold. This allows restarting the method 100 to eventually find and reach a new maximum of power available if the irradiance conditions of the PV panel 2 have evolved. The first threshold may for example be lower than 5 minutes, and preferably be lower than 1 minute.

In some examples, a new iteration of the method 100 may be started when a gap between a maximum voltage and a minimum voltage of the output voltage of the PV panel in a first predetermined time window is greater than a second threshold. This allows restarting the method 100 when a brutal voltage variation of the output voltage of the PV panel is observed. This brutal voltage variation indicates that the irradiance conditions of the PV panel 2 have been changed and that finding and reaching a new maximum of power may be relevant. In some examples, the second threshold may be greater than 3V, preferably be greater than 10V.

In some examples, a new iteration of the method 100 may be started when a gap between a maximum current and a minimum current of the output current of the PV panel in a second predetermined time window is greater than a third threshold. This allows restarting the method 100 when a brutal current variation of the output current of the PV panel is observed. This brutal current variation indicates that the irradiance conditions of the PV panel 2 have been changed and that finding and reaching a new maximum of power may be relevant. In some examples, the third threshold may be greater than 10A, preferably be greater than 50A.

The first and the second predetermined time windows may for example be lower than 10 seconds and preferably be lower than 1 seconds.

The present disclosure also presents a computer-readable storage medium comprising instructions which, when executed by a controller, cause the controller to carry out any one of the methods presented hereby.

The present disclosure also describes a computer program product comprising instructions which, when the program is executed by a computer, cause the computer to carry out any one of the methods hereby described.

The present disclosure therefore allows using an energy supplied by a PV panel 2 to drive an electric motor in a system wherein there is no DC/DC converter for modifying the output voltage of the PV panel, while controlling the output voltage of the PV panel to benefit from a maximum power in view of the conditions of irradiance of the PV panel. The solution presented in the present disclosure ingeniously uses the control of the electric motor to control the output voltage of the PV panel 2, and therefore identifies and reaches a voltage associated with a maximum of power of the latest voltage variation of the output voltage of a PV panel 2.

## Claims

1. A method (100) for supplying a power from a photovoltaic panel (2) to an electric motor (4), the photovoltaic panel (2), PV panel, being connected to a variable speed drive (3), VSD, driving the electric motor (4), the method (100) comprising:
controlling (110) the electric motor to produce at least one voltage variation (ΔV) at an output voltage of the PV panel;
monitoring (120) a power supplied by the PV panel during a latest voltage variation (ΔV) of the at least one voltage variation (ΔV);
identifying (130) a voltage (V_{Pmax}) having maximized the power supplied by the PV panel during the latest voltage variation (ΔV) of the at least one voltage variation (ΔV);
defining (140) a target voltage (V_{T}) such that applying a maximum power point tracking, MPPT, technique from the target voltage (V_{T}) controls the output voltage of the PV panel to reach the identified voltage (V_{Pmax});
controlling (150) the electric motor to reach the target voltage (V_{T}) at the output voltage of the PV panel; and
starting (160) the MPPT technique from the target voltage (V_{T}).

2. The method according to the preceding claim, wherein controlling (110) the electric motor to produce at least one voltage variation (ΔV) at the output voltage of the PV panel comprises:
controlling (111) the electric motor to produce a first voltage variation (ΔV₁) corresponding to an evolution of the output voltage of the PV panel from a first voltage (V₁) to a second voltage (V₂),
wherein the first voltage (V₁) is determined based on:
a current voltage (V_{cur}) at an output voltage of the PV panel, or
an output voltage of the PV panel when a speed of the electric motor is at a minimum point; and
wherein the second voltage (V₂) is determined based on a minimum operating voltage allowing the variable speed drive to control the electric motor by producing an alternating voltage supplying the electric motor.

3. The method according to claim 2, wherein controlling (111) the electric motor to produce the first voltage variation (ΔV₁) comprises determining (1111) a first voltage reference (V_{ref1}) in a control law of the electric motor, the first voltage reference (V_{ref1}) corresponding to the second voltage (V₂); and
wherein the first voltage reference (V_{ref1}) is used in the control law to determine a first speed reference (ω_{ref1}) for the electric motor.

4. The method according to claim 2 or 3, wherein controlling (110) the electric motor to produce at least one voltage variation at the output voltage of the PV panel comprises:
controlling (112) the electric motor to produce a second voltage variation (ΔV₂), successive to the first voltage variation (ΔV₁), corresponding to an evolution of the output voltage of the PV panel from the second voltage (V₂) to a third voltage (V₃);
and wherein the third voltage (V₃) is determined based on the output voltage of the PV panel when the speed of the electric motor is at the minimum point.

5. The method according to claim 4, wherein controlling (112) the electric motor to produce the second voltage variation (ΔV₂) comprises determining (1121a) a second voltage reference (V_{ref2}) in a control law of the electric motor, the second voltage reference (V_{ref2}) corresponding to the third voltage (V₃); and
wherein the second voltage reference (V_{ref2}) is used in the control law to determine a second speed reference (ω_{ref2}) for the electric motor.

6. The method according to claim 4, wherein controlling (112) the electric motor to produce the second voltage variation (ΔV₂) comprises determining (1121b) a minimum speed reference (ωₘᵢₙ) for the electric motor in a control law of the electric motor; and wherein the minimum speed reference (ωₘᵢₙ) corresponds to the speed of the electric motor at a minimum point.

7. The method according to any of the preceding claims, wherein controlling (150) the electric motor to reach the target voltage (V_{T}) at the output voltage of the PV panel comprises determining (151) a third voltage reference (V_{ref3}) in a control law of the electric motor, the third voltage reference (V_{ref3}) corresponding to the target voltage (V_{T}); and
wherein the third voltage reference (V_{ref3}) is used in the control law to determine a third speed reference (ω_{ref3}) for the electric motor.

8. The method according to any of the preceding claims, wherein the target voltage (V_{T}) is greater than the identified voltage (V_{Pmax}).

9. The method according to any of the preceding claims, wherein the method further comprises:
monitoring (152) the power supplied by the PV panel during the control of the electric motor to reach the target voltage (V_{T}); and
if the power supplied by the PV panel during the control of the electric motor to reach the target voltage (V_{T}) becomes greater than the power associated to the identified voltage (V_{Pmax}), the method further comprises:
redefining (153) the target voltage (V_{T}) as the current output voltage of the PV panel, thereby starting (160) the MPPT technique from the current voltage.

10. The method according to any of the preceding claims, wherein a new iteration of the method (100) is started when a timer started at a latest iteration of the method (100) becomes greater than a first threshold.

11. The method according to any of the preceding claims, wherein a new iteration of the method (100) is started when a gap between a maximum voltage and a minimum voltage of the output voltage of the PV panel in a first predetermined time window is greater than a second threshold.

12. The method according to any of the preceding claims, wherein a new iteration of the method (100) is started when a gap between a maximum current and a current of an output current of the PV panel in a second predetermined time window is greater than a third threshold.

13. The method according to any of the preceding claims, wherein the target voltage (V_{T}) belongs to a voltage range (Vr) of the output voltage of the PV panel comprising a single maximum of power of the latest voltage variation (ΔV) and being free of any minimum of power of the latest voltage variation (ΔV); and
wherein the single maximum of power of the latest voltage variation (ΔV) corresponds to the maximum of power associated to the identified voltage (V_{Pmax}).

14. A computer-readable storage medium comprising instructions which, when executed by a controller (PROC), cause the controller (PROC) to carry out the method (100) of any one of the above method claims.

15. A variable speed drive (3), adapted to carry out the method (100) of any one of the above method claims.
